(19) Europäisches Patentamt
European Patent Office
Office européen des brevets

(11) EP 1 494 100 A1

(12) **EUROPÄISCHE PATENTANMELDUNG**

(43) Veröffentlichungstag:
**05.01.2005 Patentblatt 2005/01**

(51) Int Cl.[7]: **G05B 19/045**

(21) Anmeldenummer: **03014878.7**

(22) Anmeldetag: **30.06.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **SIEMENS AKTIENGESELLSCHAFT**
**80333 München (DE)**

(72) Erfinder: **Behringer, Klaus**
**91338 Igensdorf (DE)**

(54) **Vorrichtung und Verfahren zur parametrierbaren Steuerung**

(57) Steuergeräte mit mehreren Eingängen und mehreren Ausgängen sollen hinsichtlich ihrer Parametrierung optimiert werden. Daher ist vorgesehen, nicht sämtliche Kombinationen von Eingängen bei der Ermittlung eines Ausgangswerts ($Y_j$) auszuwerten. Vielmehr soll der Sollwert ($S_{i,n}$) von Eingangszuständen auf einen Unabhängigkeitszustandswert gesetzt werden, so dass in einem Vergleichsschritt (S5) nur diejenigen Vergleiche von Ist- und Sollwert ($F_i$, $S_{i,n}$) durchgeführt werden müssen, bei denen der Sollwert nicht dem Unabhängigkeitszustandswert entspricht. Damit kann die Laufzeit zur Ermittlung der Ausgangszustandswerte reduziert werden.

FIG 2

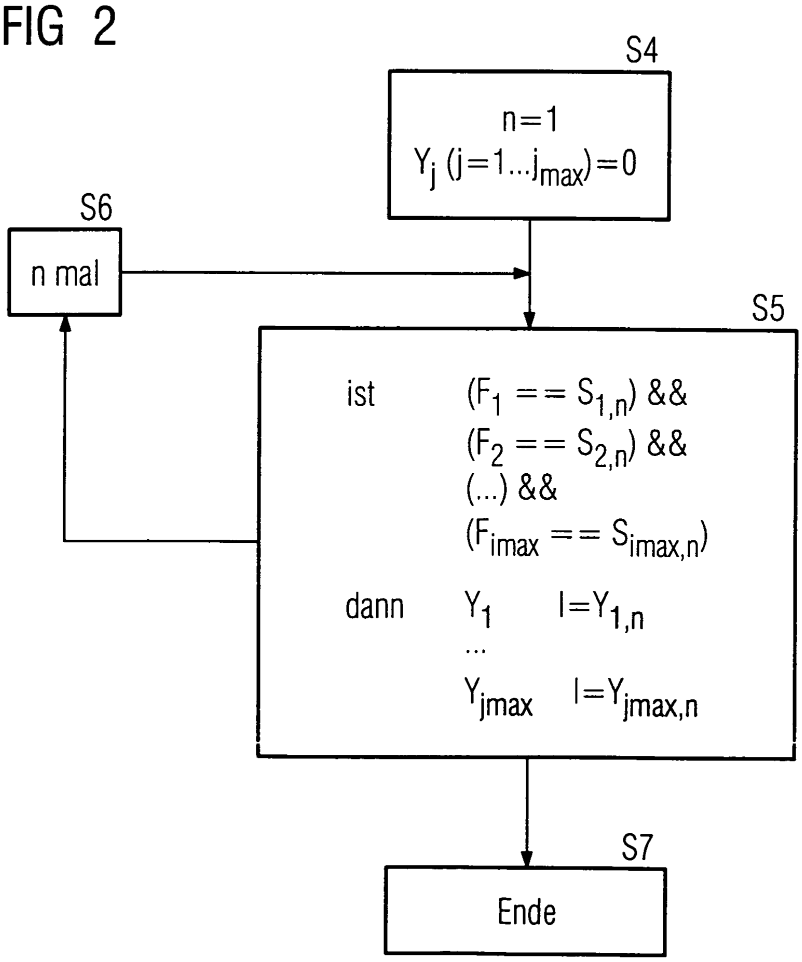


EP 1 494 100 A1

## Beschreibung

Die vorliegende Erfindung betrifft eine Steuerungsvorrichtung mit mehreren Eingängen zum Aufnehmen jeweils eines Eingangsistwerts, mehreren Ausgängen zum Ausgeben jeweils eines digitalen Ausgangswerts, einer Speichereinrichtung zum Speichern von Sollwerten und einer Zuordnungseinrichtung zum Zuordnen eines digitalen Ausgangswerts zu einem der digitalen Ausgänge in Abhängigkeit eines Vergleichs von mindestens einem der Eingangsistwerte mit einem entsprechenden Sollwert. Darüber hinaus betrifft die vorliegende Erfindung ein entsprechendes Verfahren zum Steuern eines Geräts.

Bei zahlreichen Anwendungen der Steuerungstechnik werden Ausgänge $Y_j$ in Abhängigkeit von Eingängen $X_i$ ein- oder ausgeschaltet. Dabei ist eine Steuerungsvorrichtung gekennzeichnet durch die Anzahl der Ausgänge $j_{max}$ und Anzahl der Eingänge $i_{max}$. Bei jeweils zwei Ein- und Ausgängen, d. h. $j_{max} = 2$ und $i_{max} = 2$ sind grundsätzlich sechzehn verschiedene Zustände denkbar. Bei Steuergeräten mit achtzehn Ein- und Ausgängen, wie sie durchaus in der Steuerungstechnik verwendet werden, sind dementsprechend bereits über 260.000 verschiedene Zustände möglich.

In bislang realisierten Geräten wurden sämtliche Ein- und Ausgänge programmiertechnisch ausgewertet. Dies hat jedoch bei steigender Anzahl von Ein- und Ausgängen (Ios) folgende Nachteile: Es besteht ein hoher Bedarf an ROM und RAM. Des Weiteren erfordert die im Umfang exponentiell steigende Parametriertabelle ein sehr großes EEPROM, lange Lesezeiten usw. Die hohe Anzahl an Zuständen erfordert ferner eine sehr komplexe Parametrierung und bedingt sehr hohe Laufzeiten. Letzteres ist speziell für die Sicherheitstechnik ein großes Problem im Hinblick auf NOTAUS-Reaktionszeiten und maximale Testzeiten für Zweitfehlerwiedereintrittszeit.

Ein Steuerungsgerät derart hoher Komplexität ist beispielsweise von der Firma Pilz unter der Bezeichnung "PNOZ MULTI" bekannt. Ein großer Teil der Logik ist dabei in Hardware realisiert. Diese ist aufgrund von Redundanz und Diversität, verbunden mit einem SFF-Level über 90 % für den Sicherheitsstandard KAT4 entsprechend umfangreich ausgestaltet. Es werden dabei zwei verschiedene Controllertypen mit unterschiedlicher Firmware benutzt. Dies hat den Zweck, dass der schnellere Controller die Steuerungsfunktionen ausführt und der langsamere zur Kontrolle dient.

Die vorliegende Anmelderin vertreibt ihrerseits auf dem Markt Sicherheitsgeräte der Siguard-Reihe, die mit einer Firmware und einem Controllertyp auskommen, wobei jedoch ein Master-Slave-Betrieb notwendig ist, bei dem beide Controller alle Steuerfunktionen abarbeiten und somit im Prinzip doppelte Laufzeit gegenüber dem oben genannten Gerät benötigen. Dieser Nachteil muss durch einen Algorithmus hoher Leistungsfähigkeit kompensiert werden.

Die Aufgabe der vorliegenden Erfindung besteht somit darin, ein weniger aufwändiges Steuerungsgerät und entsprechendes Verfahren für die Sicherheitstechnik vorzuschlagen.

Erfindungsgemäß wird diese Aufgabe gelöst durch eine Steuerungsvorrichtung mit mehreren Eingängen zum Aufnehmen jeweils eines Eingangsistwerts, mehreren Ausgängen zum Ausgeben jeweils eines digitalen Ausgangswerts, einer Speichereinrichtung zum Speichern von Sollwerten hinsichtlich der Ein- und Ausgänge und einer Zuordnungseinrichtung zum Zuordnen eines digitalen Ausgangswerts zu einem der digitalen Ausgänge in Abhängigkeit eines Vergleichs von mindestens einem der Eingangsistwerte mit einem entsprechenden Sollwert, wobei in der Speichereinrichtung mindestens einer der Sollwerte mit einem Unabhängigkeitszustandswert belegbar ist und mit der Zuordnungseinrichtung das Zuordnen eines digitalen Ausgangswerts zu einem der digitalen Ausgänge unabhängig von demjenigen mindestens einen Eingangsistwert durchführbar ist, dessen zugeordneter Sollwert den Unabhängigkeitszustandswert besitzt.

Ferner ist erfindungsgemäß vorgesehen ein Verfahren zum Steuern eines Geräts durch Aufnehmen mehrerer Eingangsistwerte, Bereitstellen von Sollwerten bezüglich Ein- und Ausgängen, Festlegen eines digitalen Ausgangswerts in Abhängigkeit eines Vergleichs von mindestens einem der Eingangsistwerte mit einem entsprechenden der Sollwerte, Ausgeben des digitalen Ausgangswerts, Belegen von mindestens einem der Sollwerte mit einem Unabhängigkeitszustandswert und Festlegen des digitalen Ausgangswerts unabhängig von demjenigen mindestens einen Eingangsistwert, dessen zugeordneter Sollwert den Unabhängigkeitszustandswert besitzt.

In der Sicherheitstechnik steht die Fehleranfälligkeit und die Verifizierbarkeit des Algorithmus im Vordergrund. Wenn daher der Rechenaufwand erfindungsgemäß reduziert wird, kann leicht eine sichere Steuerfunktion im Master-Slave-Betrieb erzielt werden.

Die erfindungsgemäße Steuerungsvorrichtung kann eine erste Auswerteeinrichtung umfassen, um Eingangsrohwerte in digitale Eingangswerte zur Weiterverarbeitung als Eingangsistwerte zu wandeln. Damit ist es möglich, beispielsweise analoge Eingangssignale als aktiven oder inaktiven Eingang zu klassifizieren.

Darüber hinaus kann eine zweite Auswerteeinrichtung in der Steuerungsvorrichtung vorgesehen sein, die der ersten Auswerteeinrichtung nachgeschaltet ist. Damit lassen sich die digitalen Eingangswerte logischen Eingangszuständen zur Weiterverarbeitung als Eingangsistwerte zuordnen.

Vorteilhafterweise besitzen die Sollwerte jeweils einen der Zustandswerte 1, 0 und Unabhängigkeitszustandswert. Damit können beispielsweise die binären Zustände "WAHR" und "FALSCH" sowie ein Zustand, der für das Ausgangsergebnis unerheblich ist,

realisiert werden.

In der Speichereinrichtung werden vorzugsweise mehrere Sätze von Sollwerten jeweils für einen Ausgangswert oder Satz von Ausgangswerten gespeichert. Damit können mehrere Parametrierungen in dem Gerät gleichzeitig hinterlegt werden.

Das erfindungsgemäße Steuergerät kann eine Sicherheitseinrichtung aufweisen, mit der das zu steuernde Gerät in einen Sicherheitszustand schaltbar ist. Es kann beispielsweise in den Sicherheitszustand geschaltet werden, falls die Ausgangsistwerte länger als eine vorgegebene Zeit von den entsprechenden Sollwerten abweichen. In einem speziellen Beispiel hierzu kann die Steuerungsvorrichtung zwei Controller umfassen, die beide den Algorithmus abarbeiten und in binärer Form alle erfüllten Parametrierungen sowie den Ausgangsvektor $Y_j$ ablegen. Diese abgelegten Werte werden in jedem Zyklus verglichen. Weichen sie für eine Zeit, die länger als eine vorgegebene Maximalzeit ist, ab, so wird das zu steuernde Gerät in einen sicheren Zustand geschaltet.

Die Sicherheitseinrichtung kann dahingehend optimiert werden, dass die Sätze von Sollwerten in festen Zeitabständen mit einer Prüfsumme überprüft werden. Speziell kann eine Sollwertmatrix, d. h. eine feste Parametrierung, die im Speicher abgelegt ist, blockweise mit einer zyklischen CRC (cyclic redundancy check sum) gesichert und in festen Zeitabständen verifiziert werden, um Fehler in der Matrix S beziehungsweise im Speicher aufzudecken. Somit kann auf einfache Weise eine variable Funktion auf Fehler überprüft werden.

Die vorliegende Erfindung wird nun anhand der beigefügten Zeichnungen näher erläutert, in denen zeigen:

FIG 1 ein prinzipielles Ablaufdiagramm zur Vorverarbeitung von Eingangsistwerten; und

FIG 2 ein Logikdiagramm für die erfindungsgemäße Zuordnung von Ausgangszuständen.

Die nachfolgend näher beschriebenen Ausführungsbeispiele stellen bevorzugte Ausführungsformen der vorliegenden Erfindung dar.

Die Ausgänge Y eines Steuerungs-Sicherheitsgeräts sind das Ergebnis einer Schaltfunktion H mit Eingang X:

$$Y = H(X)$$

Dabei kann der Eingang X beziehungsweise die mehreren Eingänge $X_i$ jeweils unabhängig von seiner/ihrer Funktion folgende Zustände besitzen:

0 ("FALSE") Eingang muss inaktiv sein
$X_i$ = 1 ("TRUE") Eingang muss aktiv sein
D ("DONTCARE") Eingangszustand kann beliebig sein

In der Steuerungstechnik wird ein aktiver Ausgangszustand $Y_j$ in der Regel bei genau einem oder sehr wenigen Eingangszustandsvektoren erreicht. Bei dem größten Teil der Eingangszustandsvektoren $X_i$ werden der beziehungsweise die Ausgänge inaktiv gestaltet. Bei unkorrelierten Eingängen, d. h. Eingänge, die nicht aufeinander wirken, wie z. B. Betriebswahlschalter, Muting, Schlüsselschalter oder Ähnliche, existieren üblicherweise höchstens $j_{max}$ Eingangszustandsvektoren für $j_{max}$ aktive Ausgänge $Y_j$.

Sind die Eingänge dagegen korreliert, so gilt:

Anzahl der aktiven Ausgangszustände

$$Y_j < \sum_{1}^{j_{max}} \left( \prod Z_i \right)$$

Dabei entspricht $Z_i$ der Anzahl der Korrelationen der Eingänge $X_i$. Im Grenzfall der unkorrelierten Eingänge ist Z = 1, da die Eingänge dann nur mit sich selbst korreliert sind.

Die Auswertung der Eingänge erfolgt entsprechend diesem erfindungsgemäßen Beispiel in zwei Stufen, wie dies in FIG 1 angedeutet ist. Roheingangsdaten $R_i$, z. B. Analogsignale oder Digitalsignale beliebigen Pegels, werden zunächst einer physikalischen Auswertung unterzogen. Es erfolgt hier beispielsweise die Zuordnung $X_i = 1$, wenn der entsprechende Eingang aktiv ist, und $X_i = 0$, wenn der Eingang inaktiv ist.

In einem zweiten Schritt S2 werden die digitalen Eingangswerte $X_i$ logisch ausgewertet. Dabei besitzt jeder Eingang eine Funktions-ID, z. B. $ID_1$ = ID_EINTASTER. Jedem digitalen Eingangswert $X_i$ wird ein logischer Eingangszustand beziehungsweise Funktionswert $F_i$ zugeordnet. Im Beispiel wäre $F_1 = 1$, wenn der Eintaster erfolgreich betätigt wurde, und $F_1 = 0$, wenn der Eintaster nicht oder nicht erfolgreich betätigt wurde.

Im weiteren Schritt S3 erfolgt eine Logikzuordnung, wobei jeder Istwert $F_i$ mit einem Sollwert $S_i$ verglichen wird. Aus diesem Vergleich resultiert ein entsprechender Ausgangswert $Y_j$. Vorzugsweise ist das Steuergerät so ausgelegt, dass in ihm $n_{max}$ verschiedene Parametrierungen hinterlegt werden können. Dies bedeutet, dass für sämtliche $n_{max}$ Parametrierungen jeweils ein Satz Sollwerte $S_{i,n}$ abgespeichert ist. Diese besitzen die Werte

0("FALSE") Eingang muss inaktiv sein
$S_{i,n}$ 1("TRUE") Eingang muss aktiv sein
D("DONTCARE") Eingangszustand kann beliebig sein

FIG 2 zeigt ein Flussdiagramm zum Ermitteln

der Ausgangszustände $Y_j$. In einem Initialisierungsschritt S4 wird die Nummer des Parametersatzes auf n = 1 gesetzt und die Ausgangswerte $Y_j$ auf Null. In einem weiteren Schritt S5 werden die logischen Eingangszustände $F_i$ für jede Parametrierung n mit dem zugeordneten Sollwert $S_{i,n}$ verglichen (Vergleichsoperator "=="). Sämtliche Vergleiche werden mit dem UND-Operator "&&" verknüpft. Ist das Gesamtergebnis der Vergleiche "WAHR", so erhält der jeweilige Ausgang $Y_j$ den Wert der Verknüpfung "$Y_j$ ODER $Y_{j,n}$". Dabei entspricht $Y_{j,n}$ dem als Sollwert zusammen mit $S_{i,n}$ hinterlegten Wert.

Die Vergleichsroutine von Schritt S5 wird gemäß Schritt S6 n-mal wiederholt. Danach ist die Ausgangswertzuweisung gemäß Schritt S7 zu Ende.

Demnach kann für jede Parametrierung der Ausgang $Y_j$ mit $Y_{j,n}$ = 1 angeschaltet beziehungsweise aktiviert werden. Andernfalls ist der jeweilige Ausgang $Y_j$ inaktiv.

Erfindungsgemäß wird bei den Vergleichen in Schritt S5 nicht jeder Istwert $F_i$ mit dem entsprechenden Sollwert $S_{i,n}$ verglichen. Vielmehr wird ein Vergleich nur dann durchgeführt, wenn der Sollwert $S_{i,n}$ nicht den Wert "D" besitzt. Damit kann eine Vielzahl von Vergleichsoperationen vermieden werden. Dementsprechend reduziert sich die Gesamtlaufzeit zur Ermittlung der Ausgangszustände.

Falls die Eingänge unabhängig voneinander sind, z. B. bei parallelen Schaltern, ist die Anzahl der Parametrierungen $n_{max}$ gleich der Gesamtzahl der Ausgänge $j_{max}$. Falls dagegen die Eingänge voneinander abhängig sind, z. B. bei in Reihe verbundenen Schaltern, können beispielsweise zwei Parametrierungen für einen Ausgang notwendig sein.

In einem konkreten Beispiel werden an das Steuergerät elf unabhängige Eingänge angelegt, um vier Ausgänge zu steuern.

Dementsprechend müssen in dem Steuergerät vier unterschiedliche Parametrierungen abgelegt werden.

## Patentansprüche

**1.** Steuerungsvorrichtung mit

- mehreren Eingängen zum Aufnehmen jeweils eines Eingangsistwerts ($F_i$),
- mehreren Ausgängen zum Ausgeben jeweils eines digitalen Ausgangswerts ($Y_j$),
- einer Speichereinrichtung zum Speichern von Sollwerten ($S_i$) hinsichtlich der Ein- und Ausgänge und
- einer Zuordnungseinrichtung zum Zuordnen eines digitalen Ausgangswerts ($Y_j$) zu einem der digitalen Ausgänge in Abhängigkeit eines Vergleichs von mindestens einem der Eingangsistwerte ($F_i$) mit einem entsprechenden Sollwert,

**dadurch gekennzeichnet, dass**

- in der Speichereinrichtung mindestens einer der Sollwerte ($S_j$) mit einem Unabhängigkeitszustandswert (D) belegbar ist und
- mit der Zuordnungseinrichtung das Zuordnen eines digitalen Ausgangswerts ($Y_j$) zu einem der digitalen Ausgänge unabhängig von demjenigen mindestens einen Eingangsistwert ($F_i$) durchführbar ist, dessen zugeordneter Sollwert ($S_i$) den Unabhängigkeitszustandswert (D) besitzt.

**2.** Steuerungsvorrichtung nach Anspruch 1, die eine erste Auswerteeinrichtung umfasst, um Eingangsrohwerte ($R_i$) in digitale Eingangswerte ($X_i$) zur Weiterverarbeitung als Eingangsistwerte zu wandeln.

**3.** Steuerungsvorrichtung nach Anspruch 2, die eine zweite Auswerteeinrichtung, welche der ersten nachgeschaltet ist, umfasst, um die digitalen Eingangswerte ($X_i$) logischen Eingangszuständen ($F_i$) zur Weiterverarbeitung als Eingangsistwerte zuzuordnen.

**4.** Steuerungsvorrichtung nach einem der vorhergehenden Ansprüche, wobei die Sollwerte ($S_i$) jeweils einen der Zustandswerte 1, 0 und Unabhängigkeitszustandswert besitzen.

**5.** Steuerungsvorrichtung nach einem der vorhergehenden Ansprüche, wobei in der Speichereinrichtung mehrere Sätze von Sollwerten ($S_{i,n}$) jeweils für einen Ausgangswert oder Satz von Ausgangswerten speicherbar sind.

**6.** Steuerungsvorrichtung nach einem der vorhergehenden Ansprüche, die eine Sicherheitseinrichtung aufweist, mit der das zu steuernde Gerät in einen Sicherheitszustand schaltbar ist.

**7.** Steuerungsvorrichtung nach Anspruch 6, wobei die Sicherheitseinrichtung in den Sicherheitszustand schaltet, falls die Eingangsistwerte ($F_i$) länger als eine vorgegebene Zeit von den entsprechenden Sollwerten ($S_{i,n}$) abweichen.

**8.** Steuerungsvorrichtung nach Anspruch 6 oder 7, wobei die Sätze von Sollwerten ($S_{i,n}$) in festen Zeitabständen mit einer Prüfsumme überprüfbar sind.

**9.** Verfahren zum Steuern eines Geräts durch

- Aufnehmen mehrerer Eingangsistwerte ($F_j$),
- Bereitstellen von Sollwerten ($S_{i,n}$) bezüglich Ein- und Ausgängen,
- Festlegen eines digitalen Ausgangswerts ($Y_j$) in Abhängigkeit eines Vergleichs von minde-

stens einem der Eingangsistwerte ($F_i$) mit einem entsprechenden der Sollwerte ($S_{i,n}$) und

- Ausgeben des digitalen Ausgangswerts ($Y_j$), **gekennzeichnet durch**
- Belegen von mindestens einem der Sollwerte ($S_{i,n}$) mit einem Unabhängigkeitszustandswert (D) und
- Festlegen des digitalen Ausgangswerts ($Y_j$) unabhängig von demjenigen mindestens einen Eingangsistwert ($F_i$), dessen zugeordneter Sollwert ($S_{i,n}$) den Unabhängigkeitszustandswert (D) besitzt.

**10.** Verfahren nach Anspruch 9, wobei das Aufnehmen mehrerer Eingangsistwerte ($F_i$) ein Wandeln (S1) von Eingangsrohwerten ($R_i$) in digitale Eingangswerte ($X_i$) zur Weiterverarbeitung als Eingangsistwerte ($F_i$) umfasst.

**11.** Verfahren nach Anspruch 10, wobei die digitalen Eingangswerte ($X_i$) zu logischen Eingangszuständen zur Weiterverarbeitung zugeordnet (S2) werden.

**12.** Verfahren nach einem der Ansprüche 9 bis 11, wobei die Sollwerte ($S_{i,n}$) jeweils einen der Zustandswerte 1, 0 und Unabhängigkeitszustandswert (D) besitzen.

**13.** Verfahren nach einem der Ansprüche 9 bis 12, wobei mehrere Sätze von Sollwerten ($S_{i,n}$) jeweils für einen Ausgangswert ($Y_j$) oder Satz von Ausgangswerten bereitgestellt werden.

**14.** Verfahren nach einem der Ansprüche 9 bis 13, wobei das zu steuernde Gerät in einen Sicherheitszustand geschaltet wird, falls die Eingangsistwerte ($F_i$) länger als eine vorgegebene Zeit von den entsprechenden Sollwerten ($S_{i,n}$) abweichen.

**15.** Verfahren nach einem der Ansprüche 9 bis 14, wobei die Sollwerte ($S_{i,n}$) in festen Zeitabständen mit einer Prüfsumme überprüft werden und das zu steuernde Gerät gegebenenfalls in einen Sicherheitszustand geschaltet wird.

FIG 1

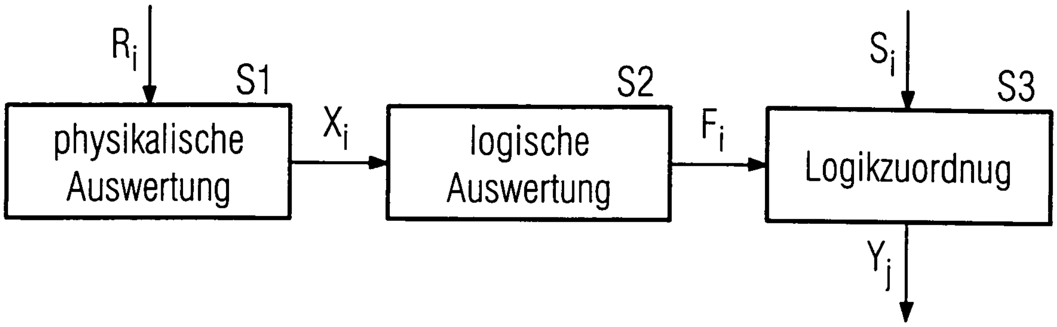
$R_i$
S1
physikalische Auswertung
$X_i$
S2
logische Auswertung
$F_i$
$S_i$
S3
Logikzuordnug
$Y_j$

FIG 2

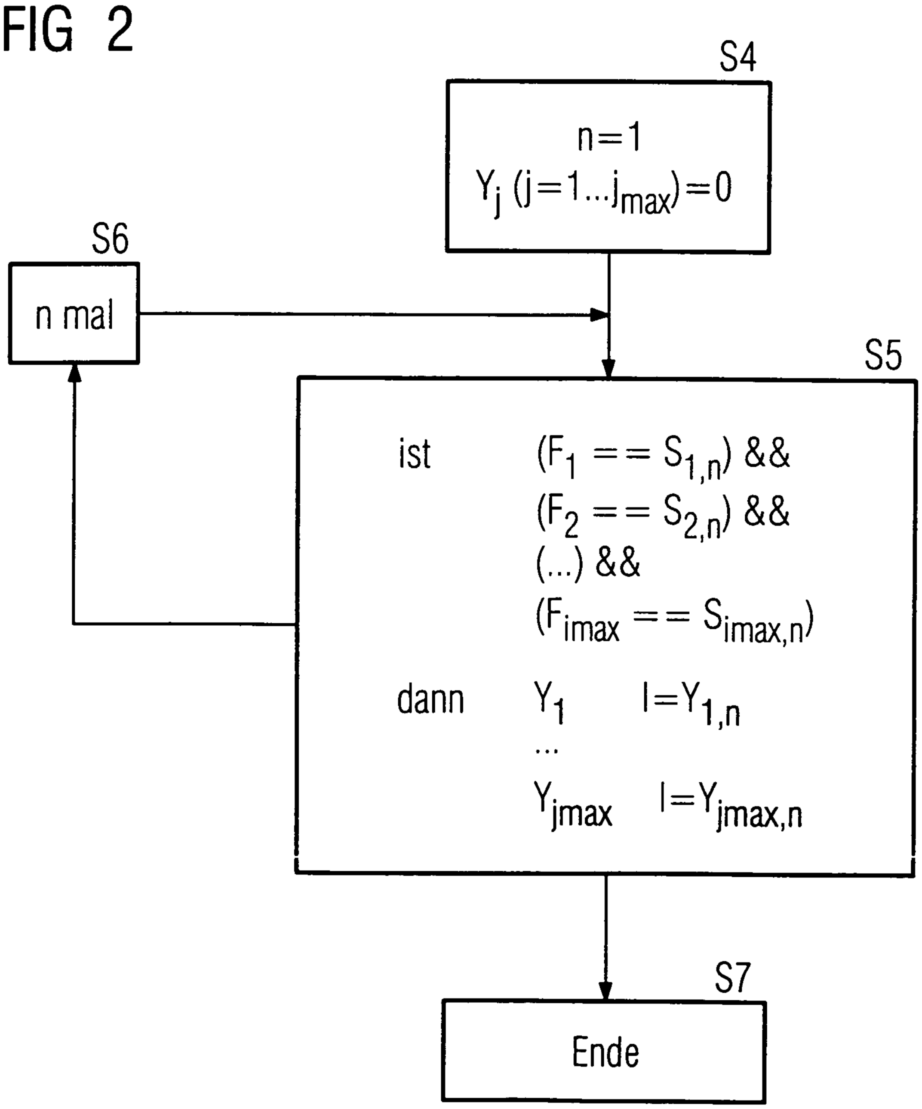
S4
n=1
$Y_j$ (j=1...$j_{max}$)=0
S6
n mal
S5
ist ($F_1$ == $S_{1,n}$) &&
($F_2$ == $S_{2,n}$) &&
(...) &&
($F_{imax}$ == $S_{imax,n}$)
dann $Y_1$ |=$Y_{1,n}$
...
$Y_{jmax}$ |=$Y_{jmax,n}$
S7
Ende

Europäisches Patentamt

# EUROPÄISCHER RECHERCHENBERICHT

Nummer der Anmeldung
EP 03 01 4878

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X<br>Y | US 4 510 602 A (FORMAZ JEROME ET AL)<br>9. April 1985 (1985-04-09)<br>* Spalte 1, Zeile 63 - Spalte 2, Zeile 24 *<br>* Spalte 3, Zeile 35 - Spalte 5, Zeile 58 * | 1-5,9-13<br>7,8,14, 15 | G05B19/045 |
| Y<br>A | GB 2 068 589 A (TURNRIGHT CONTROLS)<br>12. August 1981 (1981-08-12)<br>* Seite 2, Zeile 30 - Zeile 58 *<br>* Seite 5, Zeile 17 - Zeile 30 * | 7,14<br>1,6 | |
| Y | WO 98/44399 A (KRAMER MANFRED ; ZIEGLER OLAF (DE); ELAN SCHALTELEMENTE GMBH (DE))<br>8. Oktober 1998 (1998-10-08)<br>* Seite 7, Zeile 15 - Zeile 21 *<br>* Seite 18, Zeile 1 - Zeile 12 * | 8,15 | |
| X | US 5 623 680 A (MILLS THOMAS L ET AL)<br>22. April 1997 (1997-04-22)<br>* Spalte 2, Zeile 54 - Spalte 7, Zeile 61 *<br>* Spalte 8, Zeile 46 - Spalte 9, Zeile 60 * | 1-6,9-13 | RECHERCHIERTE SACHGEBIETE (Int.Cl.7)<br>G05B |
| X | US 5 301 100 A (WAGNER FERDINAND H)<br>5. April 1994 (1994-04-05)<br>* Spalte 5, Zeile 23 - Zeile 55 *<br>* Spalte 8, Zeile 45 - Spalte 9, Zeile 19; Abbildungen 1,4,5,8 *<br>-/-- | 1-3,5, 9-11,13 | |

Der vorliegende Recherchenbericht wurde für alle Patentansprüche erstellt

| Recherchenort | Abschlußdatum der Recherche | Prüfer |
|---|---|---|
| Den Haag | 25. Mai 2004 | Prokopiou, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 03 01 4878

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X<br>A | US 5 042 002 A (ZINK STEVEN M ET AL) 20. August 1991 (1991-08-20)<br>* Spalte 4, Zeile 54 - Spalte 5, Zeile 4 *<br>* Spalte 10, Zeile 4 - Spalte 12, Zeile 40 *<br>* Spalte 14, Zeile 25 - Spalte 15, Zeile 7 *<br>* Spalte 16, Zeile 61 - Spalte 17, Zeile 54 *<br>----- | 1,4-6,9,12,13<br>7,8,14,15 | |
| A | GB 1 459 177 A (MACH TOOL IND RES ASS) 22. Dezember 1976 (1976-12-22)<br>* Seite 2, Zeile 15 - Zeile 106 *<br>----- | 1,9 | |
| A | US 4 764 868 A (KETELHUT WILLIAM J ET AL) 16. August 1988 (1988-08-16)<br>* Spalte 18, Zeile 64 - Spalte 19, Zeile 43; Abbildung 10 *<br>----- | 1,4,9,12 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| Den Haag | 25. Mai 2004 | Prokopiou, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 03 01 4878

*In diesem Anhang sind die Mitglieder der Patentfamilien der im obengenannten europäischen Recherchenbericht angeführten Patentdokumente angegeben.*
Die Angaben über die Familienmitglieder entsprechen dem Stand der Datei des Europäischen Patentamts am
Diese Angaben dienen nur zur Unterrichtung und erfolgen ohne Gewähr.

25-05-2004

| Im Recherchenbericht angeführtes Patentdokument | Datum der Veröffentlichung | Mitglied(er) der Patentfamilie | Datum der Veröffentlichung |
|---|---|---|---|
| US 4510602 A | 09-04-1985 | FR 2508669 A1 | 31-12-1982 |
| GB 2068589 A | 12-08-1981 | KEINE | |
| WO 9844399 A | 08-10-1998 | DE 19813364 A1 | 12-11-1998 |
| | | DE 19813389 A1 | 08-10-1998 |
| | | DE 59802533 D1 | 31-01-2002 |
| | | DE 59808640 D1 | 10-07-2003 |
| | | WO 9844469 A2 | 08-10-1998 |
| | | WO 9844399 A2 | 08-10-1998 |
| | | EP 0972389 A2 | 19-01-2000 |
| | | EP 0972388 A2 | 19-01-2000 |
| | | JP 2001527713 T | 25-12-2001 |
| US 5623680 A | 22-04-1997 | DE 69428343 D1 | 25-10-2001 |
| | | DE 69428343 T2 | 04-07-2002 |
| | | EP 0662651 A2 | 12-07-1995 |
| US 5301100 A | 05-04-1994 | US 5463543 A | 31-10-1995 |
| US 5042002 A | 20-08-1991 | US 5319783 A | 07-06-1994 |
| GB 1459177 A | 22-12-1976 | KEINE | |
| US 4764868 A | 16-08-1988 | US 4870564 A | 26-09-1989 |
| | | DE 3519807 A1 | 05-12-1985 |
| | | FR 2565379 A1 | 06-12-1985 |
| | | GB 2159987 A ,B | 11-12-1985 |
| | | JP 1919214 C | 07-04-1995 |
| | | JP 6046393 B | 15-06-1994 |
| | | JP 61011869 A | 20-01-1986 |

EPO FORM P0461

Für nähere Einzelheiten zu diesem Anhang : siehe Amtsblatt des Europäischen Patentamts, Nr.12/82